# FASCICULE DE BREVET EUROPEEN

(11) **EP 2 845 841 B1**
(45) Date de publication et mention de la délivrance du brevet: **20.02.2019**
(21) Numéro de dépôt: 14181991.2
(22) Date de dépôt: 22.08.2014
(51) Int. Cl.: C03C 17/00, C03C 17/04, C03C 17/23, C03B 9/31, C03B 9/36

(54) **Installation et procédé de fabrication d'un article creux en verre**
Anlage und Verfahren zur Herstellung eines Hohlglasartikels
Facility and method for producing a hollow glass item

(30) Priorité: 05.09.2013 FR 1358523
(43) Date de publication de la demande: 11.03.2015
(73) Titulaire: Pochet du Courval, 75010 Paris (FR)
(72) Inventeur: Ravel, Patrick Roger Omer, 80580 Eaucourt sur Somme (FR); Mallard, Fabrice, 80140 Senarpont (FR); Maloigne, Philippe, 80430 Beaucamps le Vieux (FR)
(74) Mandataire: Lavoix

(56) Documents cités:
- DE-U1-202012 001 064
- US-A- 3 337 321
- DATABASE WPI Week 200608 19 janvier 2006 (2006-01-19) Thomson Scientific, London, GB; AN 2006-074378 XP002724062, -& JP 2006 016263 A (ISHIZUKA GLASS KK) 19 janvier 2006 (2006-01-19)

## Description

La présente invention se situe dans le domaine des installations de fabrication d'un article creux en verre, ces installations comportant :
- un moule finisseur destiné à recevoir une ébauche de l'article creux en verre, le moule finisseur définissant une empreinte pour former l'article creux en verre à partir de l'ébauche,
- au moins une source de gaz, et
- une tête de soufflage reliée à la source de gaz et adaptée pour réaliser au moins une injection du gaz à l'intérieur de l'ébauche contenue dans l'empreinte.

L'invention concerne également le procédé correspondant.

L'article est par exemple un flacon ou un pot.

Un procédé connu de fabrication de ce type d'articles consiste à introduire dans un moule ébaucheur au moins une paraison de verre fondu à une température déterminée et à préformer dans le moule ébaucheur l'article à partir de la paraison en injectant dans le moule ébaucheur un gaz sous pression, par exemple de l'air.

L'ébauche de l'article ainsi réalisée est transférée dans un moule finisseur et l'article est définitivement formé dans ce moule finisseur en injectant également un gaz sous pression.

Pour décorer l'article, on réalise parfois un laquage coloré à l'intérieur ou extérieur de l'article, ou bien les deux. Après que l'article a été démoulé du moule finisseur et a suffisamment refroidi, une composition colorante est appliquée sur la surface intérieure ou extérieure de l'article et un traitement thermique est réalisé pour finaliser le laquage et obtenir l'article laqué.

Un tel mode de fabrication de l'article donne satisfaction du point de vue de la qualité de l'article obtenu. Toutefois, du fait de sa durée, il est relativement peu productif et donc coûteux.

JP-A-2006016263 divulgue une méthode de coloration d'un verre de table en incorporant des particules de frittes à une ébauche de ce verre.

Un but de l'invention est donc de fournir une installation de fabrication d'un article creux en verre présentant une coloration intérieure, l'installation présentant une productivité améliorée par rapport à une installation classique.

A cet effet, l'invention a pour objet une installation de fabrication d'un article creux en verre selon la revendication 1.

Selon des modes particuliers de réalisation, la machine d'impression comprend l'une ou plusieurs des caractéristiques suivantes, prises isolément ou selon toutes les combinaisons techniquement possibles :
- le système est configuré pour que l'injection de la poudre colorante et l'injection de gaz soient sensiblement simultanées ;
- la canalisation de gaz comprend un rétrécissement dans lequel la canalisation de poudre colorante débouche, le rétrécissement étant adapté pour aspirer la poudre colorante et mélanger la poudre colorante au gaz par effet Venturi ;
- la canalisation de poudre colorante comporte un clapet anti-retour ;
- la canalisation de poudre colorante comporte une vanne d'obturation à ouverture commandée, et l'installation comprend en outre des moyens de contrôle propres à synchroniser la vanne d'obturation avec l'injection du gaz ;
- la tête de soufflage comporte un corps définissant une face de soufflage destinée à être tournée vers le moule finisseur pendant l'injection du gaz, et au moins une buse faisant saillie à partir de la face de soufflage à l'intérieur de l'ébauche pendant l'injection du gaz, la buse étant destinée à véhiculer le gaz et à le libérer à l'intérieur de l'ébauche ;
- la buse est montée mobile sur le corps de manière à changer de position par rapport à l'ébauche ;
- la tête de soufflage comprend un système d'échappement adapté pour permettre à au moins une partie du gaz injecté à l'intérieur de l'ébauche de s'échapper à l'air libre.

L'invention concerne également un procédé de fabrication d'un article creux en verre selon la revendication 8.

Selon un mode particulier de réalisation, le procédé comprend la caractéristique selon laquelle l'injection de la poudre colorante et l'injection de gaz sont sensiblement simultanées.

L'invention sera mieux comprise à la lecture de la description qui va suivre, donnée uniquement à titre d'exemple et faite en se référant aux dessins annexés, sur lesquels :
- la figure 1 est une vue schématique d'une partie d'une installation de fabrication d'un article creux en verre conforme à l'invention ; et
- la figure 2 est une vue schématique d'une autre partie de installation partiellement représentée sur la figure 1.

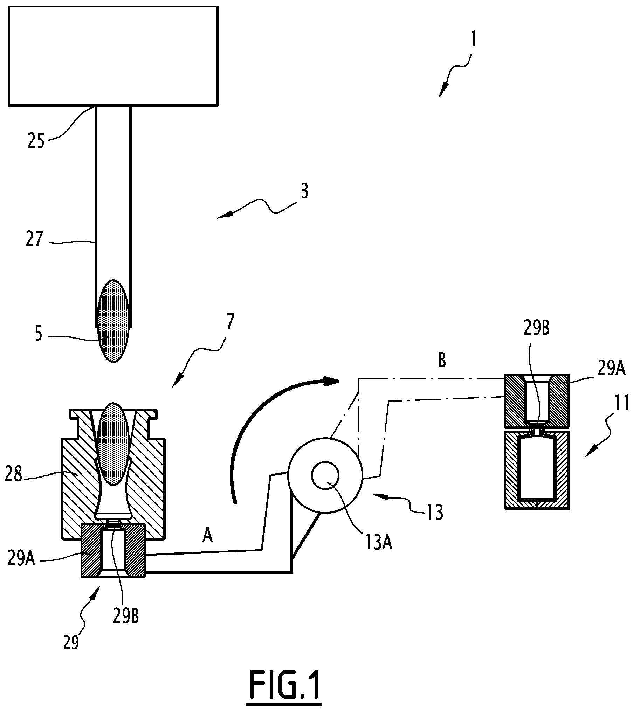

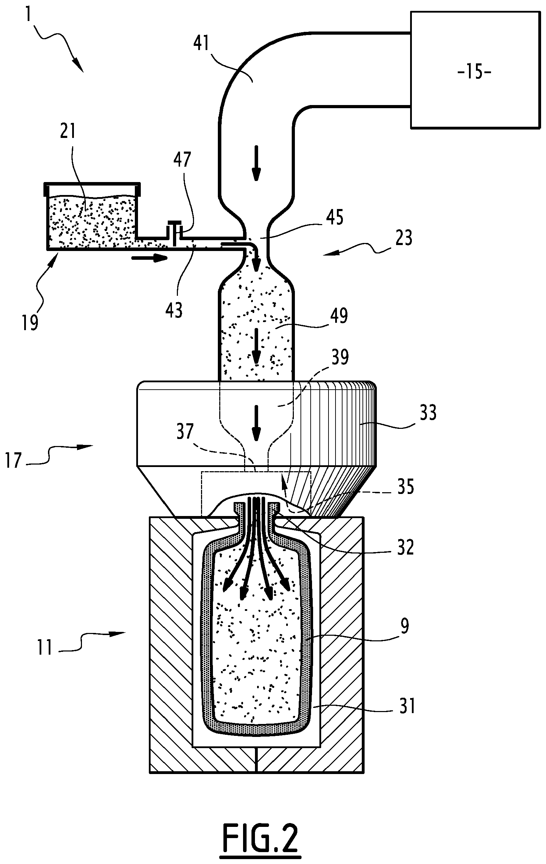

En référence aux figures 1 et 2, on décrit une installation 1 de fabrication d'un article creux en verre (non représenté).

Comme visible sur la figure 1, l'installation 1 comprend un distributeur de verre 3 destiné à délivrer une paraison 5, un moule ébaucheur 7 pour transformer la paraison 5 en une ébauche 9 (figure 2) de l'article creux en verre, un moule finisseur 11 pour former l'article creux en verre à partir de l'ébauche 9, et un bras de transfert 13 pour transférer l'ébauche 9 du moule ébaucheur 7 au moule finisseur 11.

Comme visible sur la figure 2, l'installation 1 comporte en outre une source de gaz 15, une tête de soufflage 17 reliée à la source de gaz, un réservoir 19 contenant une poudre colorante 21, et un système 23 propre à injecter la poudre colorante 21 à l'intérieur de l'ébauche 9 alors que l'ébauche est reçue dans le moule finisseur 11.

Le distributeur 3 est situé entre un four de verre (non représenté) et le moule ébaucheur 7. Le distributeur 3, d'un type connu en soi, comporte un orifice de coulée 25 et un conduit 27.

Le moule ébaucheur 7, également d'un type connu en soi, comporte un corps 28, et un ensemble 29 reliée à un dispositif (non représenté) d'alimentation en gaz sous pression, par exemple de l'air.

Le corps 28 définit une empreinte pour l'ébauche 9.

L'ensemble 29 est connu en soi. Il comprend un moule de bague 29A, une rondelle 29B, et un poinçon (non représenté).

Le moule de bague 29A et la rondelle 29B sont fixés sur le bras de transfert 13.

Le bras de transfert 13 est monté mobile autour d'un axe 13A, par exemple horizontal, entre une première position A dans laquelle le moule de bague 29A et la rondelle 29B sont appliqués sous le corps 28 du moule ébaucheur 7, et une deuxième position B dans laquelle le moule de bague 29A et la rondelle 29B sont situés au voisinage du moule finisseur 11.

L'ébauche 9 comporte une bague 32 formée par le moule de bague 29A et la rondelle 29B et adaptée pour que l'ébauche 9 reste solidaire du moule de bague et de la rondelle lorsque le bras de transfert 13 passe de la position A à la position B.

Le moule finisseur 11 (figure 2) est d'un type connu en soi. Il définit une empreinte 31 adaptée pour former l'article creux en verre.

La tête de soufflage 17 est adaptée pour réaliser au moins une injection du gaz à l'intérieur de l'ébauche 9 pour former l'article creux en verre contre l'empreinte 31.

La tête de soufflage 17 comporte un corps 33 définissant une face de soufflage 35 tournée vers le moule finisseur 11 pendant l'injection du gaz, et une buse 37 propre à véhiculer le gaz et à le libérer à l'intérieur de l'ébauche 9.

La tête de soufflage 17 définit en outre un conduit interne 39 propre à véhiculer le gaz injecté.

Selon une variante, la tête de soufflage 17 comporte aussi un système d'échappement (non représenté) adapté pour permettre à au moins une partie du gaz injecté à l'intérieur de l'ébauche 9 de s'échapper à l'air libre.

Dans l'exemple représenté, la buse 37 est un orifice ménagé dans la face de soufflage 35.

Selon une variante non représentée, la buse 37 fait saillie à partir de la face de soufflage 35 en direction, de préférence à l'intérieur, de l'ébauche 9 pendant l'injection du gaz.

Selon un mode de réalisation particulier (non représenté) de cette variante, la buse 37 est montée mobile sur le corps 33 par rapport au moule finisseur 11. La buse 37 est propre à être actionnée en translation ou en rotation, ou bien les deux, par rapport à l'ébauche 9.

La source de gaz 15 est par exemple une source d'air comprimé.

La poudre colorante 21 est propre à réagir avec l'ébauche 9 pour former une couche de décoration interne (non représentée).

La poudre colorante 21 est propre à se coller au verre entre 400°C et 1300°C.

La poudre colorante 21 possède avantageusement une composition proche de celle du verre de l'ébauche 9.

La poudre colorante 21 possède avantageusement un coefficient de dilatation thermique proche de celui du verre de l'ébauche 9. Avantageusement, le coefficient de dilatation thermique des particules de la poudre colorante 21, par exemple mesuré à 20°C, est compris entre 70% et 130% , de préférence entre 80% et 120%, de celui du verre de l'article creux mesuré dans les mêmes conditions.

Selon un premier exemple, la poudre colorante 21 est obtenue en broyant une fritte, i. e. un matériau vitreux comprenant au moins 50% en masse de silice et contenant un ou plusieurs oxydes métalliques. Parmi ces oxydes, au moins un est à l'origine de la couleur de la poudre, puis de la couleur de la couche de décoration interne. Le coefficient de dilatation thermique de la poudre colorante 21 est alors avantageusement compris entre 100% et 130% de celui du verre de l'article creux mesuré dans les mêmes conditions.

Le diamètre moyen des particules de la poudre colorante 21 est alors par exemple compris entre 20 et 50 µm.

Selon un deuxième exemple, la poudre colorante 21 est obtenue en broyant des granulés comprenant une phase organique et une phase vitreuse comportant au moins 50% en masse de silice et contenant un ou plusieurs oxydes métalliques.

Le diamètre moyen des particules de la poudre colorante 21 est alors par exemple compris entre 120 et 300 µm.

Selon un troisième exemple, la poudre colorante 21 est constituée d'un ou plusieurs oxydes métalliques, avantageusement purs à 99,5% en masse.

L'oxyde d'erbium est un exemple d'oxyde métallique conférant à la couche de décoration interne une couleur rose.

Selon un quatrième exemple, la poudre colorante 21 est obtenue en broyant des émaux qui se comprennent une partie inorganique contenant par exemple plusieurs oxydes métalliques donnant sa teinte à l'émail, et une partie organique, appelée médium. La fraction massique de la phase organique varie selon le type d'émail, en général entre 10% et 25% environ. Le coefficient de dilatation thermique de la poudre colorante 21 est alors avantageusement compris entre 70% et 100% de celui du verre de l'article creux mesuré dans les mêmes conditions.

Selon un cinquième exemple, la poudre colorante 21 est une poudre de verre obtenue avantageusement en broyant un verre analogue à celui de l'article creux en verre, si ce n'est que ce verre est coloré. Ainsi la composition de la poudre colorante 21 est très proche de celle du verre de l'article creux en verre. Le coefficient de dilatation thermique de la poudre colorante 21 est alors avantageusement sensiblement égal à celui du verre de l'article creux mesuré dans les mêmes conditions.

Il va de soi que les poudres colorantes données ci-dessus à titre d'exemple sont utilisables en mélange dans des proportions variées.

La couche de décoration interne est propre à modifier la couleur de l'article creux en verre perçue par un utilisateur (non représenté).

La couche de décoration interne est avantageusement adaptée pour ne pas modifier les propriétés physico-chimiques et mécaniques du verre dont est constituée l'ébauche 9. Par exemple, la couche de décoration interne présente comportement thermomécanique proche de celui du verre.

La couche de décoration interne est avantageusement adaptée pour faire barrage à une migration d'espèces chimiques vers un produit (non représenté), par exemple un parfum, destiné à être contenu dans l'article creux en verre. Par exemple, la couche de décoration interne est adaptée pour empêcher une migration d'espèces chimiques de nature à altérer la fragrance ou la conservation du produit.

Dans l'exemple représenté, le système 23 est configuré pour que l'injection de la poudre colorante 21 ait lieu pendant l'injection du gaz.

Selon une variante non représentée, le système 23 est configuré pour que l'injection de la poudre colorante 21 ait lieu au moins en partie avant l'injection du gaz.

Le système 23 comprend une canalisation de gaz 41 propre à acheminer le gaz depuis la source de gaz 15 jusqu'à la tête de soufflage 17, et une canalisation de poudre colorante 43 connectant le réservoir 19 à la canalisation de gaz.

La canalisation de poudre colorante 43 et la canalisation de gaz 41 sont adaptées pour mélanger la poudre colorante 21 au gaz préalablement à l'injection du gaz.

Selon une variante non représentée, la canalisation de poudre colorante 43 connecte le réservoir 19 à la tête de soufflage 17. La canalisation de poudre colorante 43 et la tête de soufflage 17 sont alors adaptées pour mélanger la poudre colorante 21 au gaz préalablement à l'injection du gaz.

La canalisation de gaz 41 comporte un rétrécissement 45 dans laquelle la canalisation de poudre colorante 43 débouche.

La canalisation de poudre 43 comporte un clapet anti-retour 47 propre à empêcher un reflux de la poudre colorante 21 depuis la canalisation de gaz 41 vers le réservoir 19.

Le rétrécissement 45 est adapté pour aspirer la poudre colorante 21 et la mélanger au gaz par effet Venturi.

Selon une variante non représentée, la canalisation de poudre colorante 43 comprend une vanne d'obturation à ouverture commandée. L'installation 1 comprend alors des moyens de contrôle propres à synchroniser la vanne d'obturation avec l'injection de gaz. L'injection du gaz dure par exemple au moins une seconde.

Le fonctionnement de l'installation 1 va maintenant être décrit.

Comme visible sur la figure 1, le distributeur 3 délivre la paraison 5 en sortie de l'orifice de coulée 25. La paraison 5 tombe via le conduit 27 dans le moule ébaucheur 7. Le bras de transfert 13 est alors dans la position A.

De manière connue en soi, la buse de soufflage 29 réalise plusieurs injections d'air dans le moule ébaucheur 7 pour transformer la paraison 5 en l'ébauche 9 représentée schématiquement sur la figure 2.

Le bras de transfert 13 passe ensuite de la position A à la position B (figure 1). L'ébauche 9 reste solidaire du moule de bague 29A et de la rondelle 29B par sa bague 32 et est déplacée vers le moule finisseur 11 (figure 1 et 2). L'ébauche 9 est reçue dans le moule finisseur 11.

Pour former l'article creux en verre à partir de l'ébauche 9, une injection de gaz sous pression à l'intérieur l'ébauche 9 est réalisée (figure 2). Le gaz, de l'air dans l'exemple représenté, issu de la source de gaz 15 emprunte la canalisation de gaz 41 jusqu'à la tête de soufflage 17. Au passage dans le rétrécissement 45, le gaz subit un effet Venturi, c'est-à-dire qu'une dépression se crée dans le gaz au niveau du rétrécissement.

La poudre colorante 21 située dans le réservoir 19 emprunte la canalisation de poudre colorante 43 avant d'être aspirée dans le rétrécissement 45 du fait de la dépression. Le clapet anti-retour 47 évite un reflux du gaz et de la poudre colorante 21 vers le réservoir 19. La poudre colorante 21 aspirée se mélange au gaz pour former un mélange 49 de gaz et de poudre colorante.

Le mélange 49 arrive à la tête de soufflage 17. Le mélange 49 traverse celle-ci via le conduit interne 39 et est éjecté dans l'ébauche 9 par la buse 37.

On comprend que l'injection de la poudre colorante 21 et l'injection du gaz sont sensiblement simultanées dans l'exemple représenté. Par « sensiblement simultanées », on entend que le début de l'injection de la poudre colorante 21 intervient moins de 1/10^{e} de seconde après le début de l'injection de gaz et que la fin de l'injection de la poudre colorante intervient moins de 1/10^{e} de seconde avant la fin de l'injection de gaz.

Avantageusement, l'injection de la poudre colorante 21 est réalisée pendant une durée comprise entre 0 et 10 secondes.

En variante, l'injection de la poudre colorante 21 débute après le début de l'injection du gaz.

Selon une autre variante, l'injection de la poudre colorante s'interrompt avant la fin de l'injection du gaz.

Selon une autre variante, l'injection de poudre se poursuit après la fin de l'injection de gaz.

Dans d'autres modes de réalisation, les variantes précédentes sont combinées selon toutes les combinaisons techniquement possibles. Ainsi, l'injection de la poudre colorante 21 a lieu:
- pendant,
- après, ou
- pendant et après,
l'injection du gaz servant à former l'article creux en verre à partir de l'ébauche 9.

Selon le moment de l'injection de la poudre colorante 21, la poudre colorante est injectée dans ce qui n'est encore que l'ébauche 9, ou bien ce qui est déjà devenu l'article creux en verre. En tout état de cause, lors de l'injection de la poudre colorante 21, l'ébauche 9 et, le cas échéant, l'article creux en verre, sont toujours dans le moule finisseur 11.

L'ébauche 9 se gonfle dans l'empreinte 31 du moule finisseur 11 pour former l'article creux en verre. La poudre colorante 21 injectée dans l'ébauche 9 se colle au verre à l'intérieur de l'ébauche pour former la couche de décoration interne.

La couche de décoration interne est susceptible de prendre un aspect parmi une pluralité d'aspects. Selon un mode de réalisation, la couche de décoration interne forme un motif à l'intérieur de l'article creux en verre, par exemple un motif en spirale.

L'installation 1 est par exemple configurée pour que la poudre colorante 21 se dépose sur l'ébauche 9 alors que l'intérieur de l'ébauche présente une température de surface comprise entre 600°C et 1300°C.

Grâce aux caractéristiques décrites ci-dessus, la coloration intérieure de l'article creux en verre est réalisée à chaud pendant le formage de l'article creux en verre dans le moule finisseur 11. Il en résulte un gain de temps dans la fabrication. Ainsi, l'installation 1 présente une productivité améliorée par rapport à une installation classique réalisant un laquage à froid après le formage.

L'installation 1 permet en outre une bonne maîtrise de la répartition intérieure du verre au cours du formage et de la qualité du verre de l'article creux en verre.

## Revendications

1. Installation (1) de fabrication d'un article creux en verre, l'installation (1) comportant :
- un moule finisseur (11) destiné à recevoir une ébauche (9) de l'article creux en verre, le moule finisseur (11) définissant une empreinte (31) pour former l'article creux en verre à partir de l'ébauche (9),
- au moins une source de gaz (15), et
- une tête de soufflage (17) reliée à la source de gaz (15) et adaptée pour réaliser au moins une injection du gaz à l'intérieur de l'ébauche (9) contenue dans l'empreinte (31),
**caractérisée en ce qu'**elle comprend en outre :
- au moins un réservoir (19) contenant une poudre colorante (21), et
- un système (23) propre à injecter la poudre colorante (21) à l'intérieur de l'ébauche (9) alors que l'ébauche (9) se situe dans le moule finisseur (11) et à l'intérieur de l'article creux en verre alors que l'article creux en verre se situe dans le moule finisseur (11), le système (23) étant configuré pour que l'injection de la poudre colorante (21) ait lieu pendant, après, ou pendant et après l'injection de gaz, le système (23) comprenant :
- une canalisation de gaz (41) propre à acheminer le gaz depuis la source de gaz (15) jusqu'à la tête de soufflage (17), et
- une canalisation de poudre colorante (43) connectant le réservoir (19) à la canalisation de gaz (45), la canalisation de poudre colorante (43) et la canalisation de gaz (45) étant adaptées pour mélanger la poudre colorante (21) au gaz préalablement à l'injection du gaz.

2. Installation (1) selon la revendication 1, **caractérisée en ce que** le système (23) est configuré pour que l'injection de la poudre colorante (21) et l'injection de gaz soient sensiblement simultanées.

3. Installation (1) selon la revendication 1 ou 2, **caractérisée en ce que** la canalisation de gaz (41) comprend un rétrécissement (45) dans lequel la canalisation de poudre colorante (43) débouche, le rétrécissement (45) étant adapté pour aspirer la poudre colorante (21) et mélanger la poudre colorante (21) au gaz par effet Venturi.

4. Installation (1) selon l'une quelconque des revendications 1 à 3, **caractérisée en ce que** la canalisation de poudre colorante (45) comporte un clapet anti-retour (47).

5. Installation (1) selon l'une quelconque des revendications 1 à 4 **caractérisée en ce que** la canalisation de poudre colorante (43) comporte une vanne d'obturation à ouverture commandée, et **en ce que** l'installation (1) comprend en outre des moyens de contrôle propres à synchroniser la vanne d'obturation avec l'injection du gaz.

6. Installation (1) de fabrication selon l'une quelconque des revendications 1 à 5, **caractérisée en ce que** la tête de soufflage (17) comporte un corps (33) définissant une face de soufflage (35) destinée à être tournée vers le moule finisseur (11) pendant l'injection du gaz, et au moins une buse (37) faisant saillie à partir de la face de soufflage (35) à l'intérieur de l'ébauche (9) pendant l'injection du gaz, la buse (37) étant destinée à véhiculer le gaz et à le libérer à l'intérieur de l'ébauche (9).

7. Installation (1) de fabrication selon la revendication 6, **caractérisée en ce que** la buse (37) est montée mobile sur le corps (33) de manière à changer de position par rapport à l'ébauche (9).

8. Procédé de fabrication d'un article creux en verre comportant au moins les étapes suivantes :
- réception d'une ébauche (9) de l'article creux en verre dans un moule finisseur (11), le moule finisseur (11) définissant une empreinte (31) pour former l'article creux en verre à partir de l'ébauche (9), et
- réalisation d'au moins une injection d'un gaz à l'intérieur de l'ébauche (9) contenue dans l'empreinte (31) à l'aide d'une tête de soufflage (17), le gaz provenant d'au moins une source de gaz (15) reliée à la tête de soufflage (17),
le procédé étant **caractérisé en ce qu'**il comprend en outre une étape d'injection d'une poudre colorante (21) à l'intérieur de l'ébauche (9), l'ébauche (9) étant reçue dans le moule finisseur (11), ou d'injection à l'intérieur de l'article creux en verre alors que l'article creux en verre se situe dans le moule finisseur (11), la poudre colorante (21) provenant d'au moins un réservoir (19), l'injection de la poudre colorante (21) ayant lieu pendant, après, ou pendant et après l'injection de gaz.

9. Procédé selon la revendication 8, **caractérisé en ce que** l'injection de la poudre colorante (21) et l'injection de gaz sont sensiblement simultanées.

## Patentansprüche

1. Anlage (1) zur Herstellung eines Hohlglasgegenstandes, wobei die Anlage (1) aufweist:
- eine Fertigform (11), die dazu vorgesehen ist, einen Vorformling (9) des Hohlglasgegenstands aufzunehmen, wobei die Fertigform (11) eine Vertiefung (31) zum Formen des Hohlglasgegenstands aus dem Vorformling (9) begrenzt,
- mindestens eine Gasquelle (15) und
- einen Blaskopf (17), der an die Gasquelle (15) angeschlossen ist und ausgebildet ist, mindestens eine Gasinjektion in das Innere des Vorformlings (9), der in der Vertiefung (31) enthalten ist, zu realisieren, **dadurch gekennzeichnet, dass** sie außerdem umfasst:
- mindestens einen Behälter (19), der ein farbiges Pulver (21) enthält und
- ein System (23), das dazu geeignet ist, das farbige Pulver (21) in das Innere des Vorformlings (9), während der Vorformling (9) in der Fertigform (11) liegt, und in das Innere des Hohlglasgegenstands, während der Hohlglasgegenstand in der Fertigform (11) liegt, zu injizieren, wobei das System (23) so ausgebildet ist, dass die Injektion des farbigen Pulvers (21) während, nach oder während und nach der Injektion des Gases stattfindet, wobei das System (23) umfasst:
- eine Gasleitung (41), die dazu geeignet ist, das Gas von der Gasquelle (15) bis zu dem Blaskopf (17) zu leiten und
- eine Leitung (43) für das farbige Pulver, die den Behälter (19) mit der Gasleitung (45) verbindet, wobei die Leitung (43) für das farbige Pulver und die Gasleitung (45) dazu ausgebildet sind, das farbige Pulver (21) vor der Injektion des Gases mit dem Gas zu mischen.

2. Anlage (1) nach Anspruch 1, **dadurch gekennzeichnet, dass** das System (13) so ausgebildet ist, dass die Injektion des farbigen Pulvers (21) und die Injektion des Gases gleichzeitig stattfinden.

3. Anlage (1) nach Anspruch 1 oder 2, **dadurch gekennzeichnet, dass** die Gasleitung (41) eine Verengung (45) umfasst, in die die Leitung (43) für farbiges Pulver mündet, wobei die Verengung (45) ausgebildet ist, das farbige Pulver (21) anzusaugen und das farbige Pulver (21) mit dem Gas durch den Venturi-Effekt zu mischen.

4. Anlage (1) nach einem beliebigen der Ansprüche 1 bis 3, **dadurch gekennzeichnet, dass** die Leitung für farbiges Pulver (45) ein Rückschlagventil (47) aufweist.

5. Anlage (1) nach einem beliebigen der Ansprüche 1 bis 4, **dadurch gekennzeichnet, dass** die Leitung (43) für farbiges Pulver ein Verschlussventil mit gesteuerter Öffnung aufweist und dass die Anlage außerdem Mittel zur Steuerung umfasst, die dazu geeignet sind, das Verschlussventil mit der Injektion des Gases zu synchronisieren.

6. Herstellungsanlage (1) zur nach einem beliebigen der Ansprüche 1 bis 5, **dadurch gekennzeichnet, dass** der Blaskopf (17) einen Körper (33), der eine Blasfläche (35) definiert, die dazu vorgesehen ist, während der Injektion des Gases zu der Fertigform (11) gerichtet zu sein, und mindestens eine Düse (37) aufweist, die während der Injektion des Gases von der Blasfläche (35) in das Innere des Vorformlings (9) hervorragt, wobei die Düse (37) dazu vorgesehen ist, das Gas zu transportieren und es in das Innere des Vorformlings (9) freizusetzen.

7. Herstellungsanlage (1) nach Anspruch 6, **dadurch gekennzeichnet, dass** die Düse (37) an dem Körper (33) derart beweglich angeordnet ist, dass sie die Position in Bezug auf den Vorformling (9) ändert.

8. Verfahren zur Herstellung eines Hohlglasgegenstands, mindestens die folgenden Schritte aufweisend:
- Aufnehmen eines Vorformlings (9) des Hohlglasgegenstands in einer Fertigform (11), wobei die Fertigform (11) eine Vertiefung (31) zum Formen des Hohlglasgegenstand aus dem Vorformling (9) begrenzt, und
- Durchführen mindestens einer Injektion des Gases in das Innere des Vorformlings (9), der in der Vertiefung (31) enthalten ist, mittels eines Blaskopfes (17), wobei das Gas von mindestens einer mit dem Blaskopf (17) verbundenen Gasquelle (15) herkommt,
wobei das Verfahren **dadurch gekennzeichnet ist, dass** es außerdem umfasst: einen Schritt der Injektion eines farbigen Pulvers (21) in das Innere des Vorformlings (9), wobei der Vorformling (9) in der Fertigform (11) aufgenommen ist, oder der Injektion in das Innere des Hohlglasgegenstandes, wenn der Hohlglasgegenstand in der Fertigform (11) liegt, wobei das farbige Pulver (21) von mindestens einem Behälter (19) herkommt und die Injektion des farbigen Pulvers (21) während, nach oder während und nach der Injektion des Gases stattfindet.

9. Verfahren nach Anspruch 8, **dadurch gekennzeichnet, dass** die Injektion des farbigen Pulvers (21) und die Injektion des Gases im Wesentlichen simultan stattfinden.

## Claims

1. A facility (1) for manufacturing a hollow glass article, the facility (1) including:
- a finishing mold (11) intended for receiving a blank (9) of the hollow glass article, the finishing mold (11) defining a cavity (31) for forming the hollow glass article from the blank (9),
- at least one gas source (15), and
- a blowing head (17) connected to the gas source (15) and adapted for achieving at least one injection of the gas into the inside of the blank (9) contained in the cavity (31),
**characterized in that** it further comprises:
- at least one reservoir (19) containing a coloring powder (21), and
- a system (23) capable of injecting the coloring powder (21) into the inside of the blank (9) while the blank (9) is located in the finishing mold (11) and into the inside of the hollow glass article while the hollow glass article is located in the finishing mold (11), the system (23) being configured so that the injection of the coloring powder (21) takes place during, after, or during and after gas injection, the system (23) comprising :
- a gas duct (41) capable of conveying the gas from the gas source (15) as far as the blowing head (17), and
- a coloring powder duct (43) connecting the reservoir (19) to the gas duct (45), the coloring powder duct (43) and the gas duct (45) being adapted for mixing the coloring powder (21) with the gas prior to the injection of the gas.

2. The facility (1) according to claim 1, **characterized in that** the system (23) is configured so that the injection of the coloring powder (21) and the gas injection are substantially simultaneous.

3. The facility (1) according to claim 1 or 2, **characterized in that** the gas duct (41) comprises a constriction (45) into which the coloring powder duct (43) opens, the constriction (45) being adapted for sucking up the coloring powder (21) and mixing the coloring powder (21) with the gas by a Venturi effect.

4. The facility (1) according to any of claims 1 to 3, **characterized in that** the coloring powder duct (45) includes an anti-return valve (47).

5. The facility (1) according to any of claims 1 to 4, **characterized in that** the coloring powder duct (43) includes an obturation valve, the opening of which is controllable, and **in that** the facility (1) further comprises control means capable of synchronizing the obturation valve with the injection of the gas.

6. The manufacturing facility (1) according to any of claims 1 to 5, **characterized in that** the blowing head (17) includes a body (33) defining a blowing face (35) intended to be turned towards the finishing mold (11) during the injection of the gas, and at least one nozzle (37) protruding from the blowing face (35) inside the blank (9) during injection of the gas, the nozzle (37) being intended for conveying the gas and releasing it inside the blank (9).

7. The manufacturing facility (1) according to claim 6, **characterized in that** the nozzle (37) is mounted so as to be movable on the body (33) so as to change position relatively to the blank (9).

8. A method for manufacturing a hollow glass article including at least the following steps:
- receiving a blank (9) of the hollow glass article in a finishing mold (11), the finishing mold (11) defining a cavity (31) for forming the hollow glass article from the blank (9), and
- achieving at least one injection of a gas into the inside of the blank (9) contained in the cavity (31) by means of a blowing head (17), the gas stemming from at least one gas source (15) connected to the blowing head (17),
the method being **characterized in that** it further comprises a step for injecting a coloring powder (21) into the inside of the blank (9), the blank (9) being received in the finishing mold (11), or injecting it into the inside of the hollow glass article while of the hollow glass article is located in the finishing mold (11), the coloring powder (21) stemming from at least one reservoir (19), the injection of the coloring powder (21) taking place during, after, or during and after the gas injection.

9. The method according to claim 8, **characterized in that** the injection of the coloring powder (21) and the gas injection are substantially simultaneous.
